# EUROPEAN PATENT APPLICATION

(11) **EP 4 749 887 A1**
(43) Date of publication of application: **27.05.2026**
(21) Application number: 25216938.8
(22) Date of filing: 19.11.2025
(51) Int. Cl.: H02K 1/276, H02K 15/035

(54) **ROTOR**

(30) Priority: 20.11.2024 JP 2024202726
(71) Applicant: Toyota Jidosha Kabushiki Kaisha, Toyota-shi, Aichi-ken 471-8571 (JP)
(72) Inventor: OHIRA, Kengo, TOYOTA-SHI, AICHI-KEN, 471-8571 (JP); USAMI, Kazuaki, TOYOTA-SHI, AICHI-KEN, 471-8571 (JP); OHTA, Kei, TOYOTA-SHI, AICHI-KEN, 471-8571 (JP); YAMATO, Fumiaki, TOYOTA-SHI, AICHI-KEN, 471-8571 (JP); MANABE, Hideki, TOYOTA-SHI, AICHI-KEN, 471-8571 (JP); ASAOKA, Hironori, TOYOTA-SHI, AICHI-KEN, 471-8571 (JP); SUZUKI, Yasunori, TOYOTA-SHI, AICHI-KEN, 471-8571 (JP)
(74) Representative: Cabinet Beau de Loménie

(57) **Abstract**

A rotor (30) of an electric motor (20) includes a rotor core (32) having a hole (34) extending along an axial direction of the rotor (30), a permanent magnet (36, 39) disposed in the hole (34), a spacer member disposed in the hole (34) and adjacent to the permanent magnet (36, 39) on its outer side in a radial direction of the rotor (30), a first adhesive layer (L1) configured to hold the permanent magnet (36, 39) in the hole (34) and disposed between an inner surface of the hole (34) and at least part of side surfaces of the permanent magnet (36, 39) facing the inner surface, and a second adhesive layer (L2) configured to hold the spacer member in the hole (34) and disposed between the inner surface and at least part of side surfaces of the spacer member facing the inner surface. A section of the hole (34) perpendicular to the axial direction has a slot shape extending in a direction intersecting with a circumferential direction of the rotor (30).

## Description

### BACKGROUND OF THE INVENTION

### 1. Field of the Invention

The technology disclosed in the present specification relates to a rotor of an electric motor.

### 2. Description of Related Art

In a rotor disclosed in Japanese Unexamined Patent Application Publication No. 2021-100353 (JP 2021-100353 A), permanent magnets are disposed in magnet insertion holes provided in a rotor core. Each of the magnet insertion holes extends along the axial direction of the rotor. A section of the magnet insertion hole perpendicular to the axial direction has a slot shape extending in a direction intersecting with the circumferential direction of the rotor. In the rotor, a foam adhesive sheet is disposed between an inner surface extending in a direction intersecting with the circumferential direction of the magnet insertion hole and a side surface of the permanent magnet facing the inner surface. The foam adhesive sheet holds the permanent magnet in the magnet insertion hole.

In the rotor of JP 2021-100353 A, the demagnetization of the permanent magnet is inhibited by providing a space on the radial-direction outer side of the permanent magnet in the magnet insertion hole. However, there is a concern that the permanent magnet may move toward the space on the radial-direction outer side by centrifugal force due to the rotation of the rotor. When the permanent magnet moves to the space on the radial-direction outer side, the distance between the permanent magnet and an outer periphery of the rotor core becomes smaller, and the demagnetization of the permanent magnet occurs more easily.

In this type of rotor, there are cases in which resin is injected in the magnet insertion hole in the rotor core and the permanent magnet is held in the magnet insertion hole by the injected resin. The space in the magnet insertion hole is filled with the resin. Therefore, the movement of the permanent magnet to the radial-direction outer side due to the centrifugal force can be restrained, and the demagnetization of the permanent magnet can be inhibited. However, in a configuration in which the permanent magnet is held in the magnet insertion hole by injecting resin, it becomes difficult to remove the permanent magnet from the magnet insertion hole later. Therefore, in such a configuration, it becomes difficult to remove a permanent magnet magnetic force of which has been weakened due to demagnetization from the magnet insertion hole and replace the permanent magnet with a new permanent magnet, and the rotor is discarded, for example. The present disclosure provides a technology capable of improving the recyclability of a rotor.

### SUMMARY OF THE INVENTION

An aspect of the present disclosure is a rotor of an electric motor. The rotor includes a rotor core, a permanent magnet, a spacer member, a first adhesive layer, and a second adhesive layer. The rotor core has a hole extending along an axial direction of the rotor. A section of the hole perpendicular to the axial direction has a slot shape extending in a direction intersecting with a circumferential direction of the rotor. The permanent magnet is disposed in the hole of the rotor core. The spacer member is disposed in the hole and is adjacent to the permanent magnet on an outer side of the permanent magnet in a radial direction of the rotor. The first adhesive layer is configured to hold the permanent magnet in the hole. The first adhesive layer is disposed between an inner surface of the hole and at least part of side surfaces of the permanent magnet facing the inner surface. The second adhesive layer is configured to hold the spacer member in the hole. The second adhesive layer is disposed between the inner surface of the hole and at least part of side surfaces of the spacer member facing the inner surface.

The rotor includes the spacer member. The spacer member is adjacent to the permanent magnet on the outer side of the permanent magnet in the radial direction of the rotor in the hole having the sectional shape extending in the direction intersecting with the circumferential direction of the rotor. Therefore, even when centrifugal force that pushes the permanent magnet to the radial-direction outer side is generated by the rotation of the rotor, the movement of the permanent magnet is restrained by the spacer member, and demagnetization of the permanent magnet is inhibited. In the rotor, the first adhesive layer is disposed between the inner surface of the hole and at least part of the side surface of the permanent magnet facing the inner surface, and the permanent magnet is held in the hole by the first adhesive layer. The second adhesive layer is disposed between the inner surface of the hole and at least part of the side surface of the spacer member facing the inner surface, and the spacer member is held in the hole by the second adhesive layer. Therefore, as compared to a technology of holding the permanent magnet in the hole by injecting resin, it becomes possible to easily remove the permanent magnet from the hole, for example, and hence it becomes possible to improve the recyclability of the rotor.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 shows a side view of a motor unit 10 including a rotor 30 of an embodiment that is a sectional view of an electric motor 20 parallel to an axis C1; and
FIG. 2 shows a sectional view of the electric motor 20 taken along line II-II in FIG. 1.

### DETAILED DESCRIPTION OF EMBODIMENTS

At least part of the spacer member may be made of resin.

With the configuration as above, the mass of a rotor can be reduced as compared to a case in which at least part of the spacer member is made of ceramic, for example. However, in another embodiment, it is possible to configure at least part of the spacer member by ceramic or configure at least part of the spacer member by another material that does not have electrical conductivity nor a magnetic property.

At least part of the spacer member may be made of a high-coercivity magnet having a higher coercive force than a permanent magnet.

In the high-coercivity magnet, demagnetization does not easily occur as compared to the permanent magnet. With the configuration as above, the demagnetization of the permanent magnet can be inhibited by the high-coercivity magnet.

The second adhesive layer may be disposed between an outer side surface positioned on the outer side in the radial direction out of side surfaces of the spacer member and the inner surface of the hole facing the outer side surface.

Centrifugal force due to the rotation of the rotor pushes the spacer member to the radial-direction outer side. With the configuration as above, even when centrifugal force is generated on the spacer member, the outer side surface of the spacer member is pressed against the inner surface of the hole facing the outer side surface via the second adhesive layer. Therefore, the spacer member can be firmly held in the hole as compared to a configuration in which the second adhesive layer is disposed between a side surface intersecting with the circumferential direction of the rotor out of the side surfaces of the spacer member and an inner surface of the hole facing the side surface, for example.

The rotor may further include a third adhesive layer disposed between an outer side surface positioned on the outer side in the radial direction out of side surfaces of the permanent magnet and a side surface of the spacer member facing the outer side surface.

With the configuration as above, even when centrifugal force is generated on the permanent magnet, the outer side surface of the permanent magnet is pressed against the side surface of the spacer member facing the outer side surface via the third adhesive layer. Therefore, the permanent magnet can be held in the hole in a firmer manner.

### Embodiment

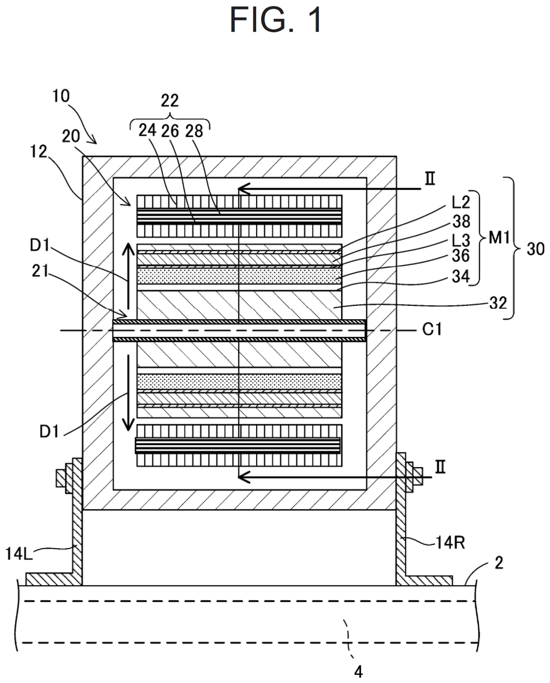

FIG. 1 shows a side view of a motor unit 10 including a rotor 30 of an embodiment. The motor unit 10 is mounted on an electrified vehicle 2, for example, and functions as a prime mover that drives wheels (not shown). As one example, the motor unit 10 is disposed in a front component (not shown) of the electrified vehicle 2. The motor unit 10 includes a casing 12 and an electric motor 20. The casing 12 houses the electric motor 20. The casing 12 is attached to the electrified vehicle 2 via a pair of brackets 14L, 14R.

The electric motor 20 is electrically connected to a battery 4 of the electrified vehicle 2. The electric motor 20 rotates by electricity supplied from the battery 4. The electric motor 20 includes a shaft 21 that outputs torque. The shaft 21 extends along an axis C1 and is supported by the casing 12 so as to be rotatable about the axis C1. The shaft 21 is mechanically connected to a transmission mechanism unit (not shown). The shaft 21 drives the wheels of the electrified vehicle 2 via the transmission mechanism unit.

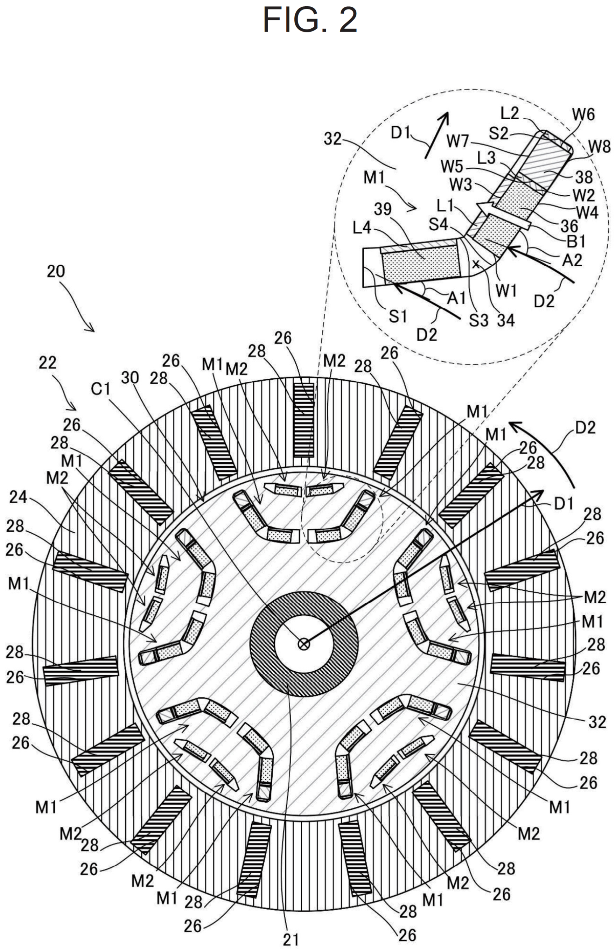

The electric motor 20 includes a stator 22 and the rotor 30. A detailed structure of the electric motor 20 will be described with reference to FIG. 1 and FIG. 2. FIG. 1 shows a sectional shape of the electric motor 20 parallel to the axis C1. FIG. 2 is a sectional view of the electric motor 20 taken along line II-II in FIG. 1. In other words, FIG. 2 shows a sectional shape of the electric motor 20 perpendicular to the axis C1.

The stator 22 includes a stator core 24 and stator coils 28. The stator coils 28 are attached to the stator core 24 by passing through through-holes 26 provided in the stator core 24. As shown in FIG. 2, the stator core 24 has a cylindrical shape and faces the rotor 30 from the outer side of the rotor 30 in a radial direction D1. As shown in FIG. 2, the through-holes 26 and the stator coils 28 are disposed in the stator core 24 at predetermined intervals along a circumferential direction D2 of the rotor 30. The number of the stator coils 28 that are disposed is changed in accordance with the number of phases and the like of the electric motor 20.

The rotor 30 includes a rotor core 32, first permanent magnets 36, second permanent magnets 39, and spacer members 38 in addition to the shaft 21 described above. The rotor core 32 is provided on an outer peripheral surface of the shaft 21 and has a cylindrical shape. The rotor core 32 is made of a ferromagnetic material. Although not particularly limited, the rotor core 32 of the present embodiment has a structure in which a plurality of electromagnetic steel sheets is stacked along the axis C1. As shown in FIG. 2, in the rotor core 32, a plurality of magnet arrangement portions M1, M2 is provided.

For example, each of the magnet arrangement portions M1 is a structure for fixing each of the permanent magnets 36, 39 and the spacer member 38 in the rotor core 32. As shown in FIG. 2, in the rotor 30, two magnet arrangement portions M1 are disposed so as to be symmetrical to each other in the circumferential direction D2. The same applies to the magnet arrangement portions M2. In the present specification, the structure of the magnet arrangement portion M1 is mainly described. A pair of the magnet arrangement portions M1 and a pair of the magnet arrangement portions M2 are disposed in the rotor core 32 at predetermined intervals along the circumferential direction D2. The number of the pairs of magnet arrangement portions M1, M2 that are disposed is changed in accordance with the number of the stator coils 28 and the like.

As shown in an enlarged view in FIG. 2 on the upper side thereof, in the magnet arrangement portion M1, the first permanent magnet 36, the second permanent magnet 39, the spacer member 38, a first foamed sheet L1, a second foamed sheet L2, a third foamed sheet L3, and a fourth foamed sheet L4 are disposed in a hole 34.

As shown in FIG. 1, the hole 34 extends in the direction of the axis C1 and passes through the rotor core 32. As shown in FIG. 2, the hole 34 is a space that is defined by a first inner surface S1 positioned in an end portion of the hole 34 on the inner side in the radial direction D1, a second inner surface S2 positioned in an end portion of the hole 34 on the outer side in the radial direction D1, and a third inner surface S3 and a fourth inner surface S4 that connect each of the inner surfaces S1, S2 to each other. The third inner surface S3 is positioned closer to the magnet arrangement portion M2 than the fourth inner surface S4. The third inner surface S3 and the fourth inner surface S4 extend substantially parallel to each other. The distance between the first inner surface S1 and the second inner surface S2 facing each other is longer than the distance between the third inner surface S3 and the fourth inner surface S4 facing each other. The hole 34 extends to be longer along the radial direction D1 than along the circumferential direction D2. As shown in FIG. 2, the hole 34 has a shape that is bent with respect to the radial direction D1. In a modification, the hole 34 may linearly extend without bending with respect to the radial direction D1.

On the inner side in the radial direction D1, the hole 34 extends in a direction intersecting with the radial direction D1. As a result, on the inner side in the radial direction D1, the fourth inner surface S4 of the hole 34 is inclined with respect to the tangent line of the circumferential direction D2 by a first angle A1. Meanwhile, the hole 34 extends to be substantially parallel to the radial direction D1 on the outer side in the radial direction D1. As a result, on the outer side in the radial direction D1, the fourth inner surface S4 is inclined with respect to the tangent line of the circumferential direction D2 by a second angle A2 greater than the first angle A1. In the present embodiment, the second angle A2 is about 80 degrees. As above, the section of the hole 34 has a slot shape extending in a direction intersecting with the circumferential direction D2 of the rotor 30. The sectional shape of the hole 34 extends in a direction intersecting with the circumferential direction D2, and hence the first permanent magnet 36 can be disposed in the hole 34 such that a longitudinal direction of the first permanent magnet 36 intersects with the circumferential direction D2. As a result, a magnetic flux B1 that is generated when a current flows through the stator coils 28 can be directed toward the permanent magnets (reference characters omitted) disposed in the second magnet arrangement portions M2. Therefore, the output of the electric motor 20 can be improved. The second angle A2 is not limited to about 80 degrees and is changed in accordance with the diameter of the rotor core 32 or the distance from the adjacent first magnet arrangement portion M1, for example. The second angle A2 may be 40 degrees or 45 degrees, for example.

The first permanent magnet 36 disposed in the hole 34 includes a first side surface W1 positioned on the inner side in the radial direction D1, a second side surface W2 positioned on the outer side in the radial direction D1, and a third side surface W3 and a fourth side surface W4 connecting the side surfaces W1, W2 to each other. As shown in the enlarged view in FIG. 2, the distance between the first side surface W1 and the second side surface W2 facing each other is longer than the distance between the third side surface W3 and the fourth side surface W4 facing each other. The first permanent magnet 36 has a rectangular section extending in the radial direction D1. As shown in FIG. 1, the first permanent magnet 36 extends along the axis C1.

The first foamed sheet L1 is disposed between the third side surface W3 of the first permanent magnet 36 and the third inner surface S3 of the hole 34. The first foamed sheet L1 covers part of the third side surface W3 of the first permanent magnet 36 and contains foamable resin. In a process of manufacturing the rotor 30, the first permanent magnet 36 is disposed in the hole 34, and then the first foamed sheet L1 is disposed between the third side surface W3 of the first permanent magnet 36 and the third inner surface S3 of the hole 34. Then, the foamable resin of the first foamed sheet L1 forms and fills the gap between the third side surface W3 and the third inner surface S3 by being heated. By heating, a front surface of the first foamed sheet L1 melts and adheres to the third side surface W3 and the third inner surface S3. As above, the first foamed sheet L1 holds the first permanent magnet 36 in the hole 34. Similarly, the fourth foamed sheet L4 also holds the second permanent magnet 39 in the hole 34.

The spacer member 38 is positioned between the first permanent magnet 36 and the second inner surface S2. The spacer member 38 is adjacent to the first permanent magnet 36 on the outer side of the first permanent magnet 36 in the radial direction D1. The spacer member 38 includes a fifth side surface W5 positioned on the inner side in the radial direction D1, a sixth side surface W6 positioned on the outer side in the radial direction D1, and a seventh side surface W7 and an eighth side surface W8 connecting the side surfaces W5, W6 to each other. As shown in the enlarged view in FIG. 2, the distance between the fifth side surface W5 and the sixth side surface W6 facing each other is longer than the distance between the seventh side surface W7 and the eighth side surface W8 facing each other. The spacer member 38 has a rectangular section extending in the radial direction D1. As shown in FIG. 1, the spacer member 38 extends along the axis C1.

Here, when a current flows through the stator coils 28 of the stator 22, the rotor 30 rotates in the circumferential direction D2, for example, about the shaft 21 serving as the axis of rotation. In this case, centrifugal force that pushes the first permanent magnet 36 and the spacer member 38 to the outer side in the radial direction D1 is generated.

The spacer member 38 is a member for filling the space on the outer side of the first permanent magnet 36 in the radial direction D1. By disposing the spacer member 38 in the space, the first permanent magnet 36 can be disposed on the inner side in the radial direction D1. Therefore, the distance between the first permanent magnet 36 and an outer peripheral edge of the rotor core 32 can be increased. In other words, the second side surface W2 of the first permanent magnet 36 can be spaced apart from the ferromagnetic material of the rotor core 32 positioned between the second inner surface S2 and an outer peripheral surface of the rotor core 32. The spacer member 38 restrains the first permanent magnet 36 from moving to the outer side in the radial direction D1 by centrifugal force due to the rotation of the rotor 30. As above, the spacer member 38 inhibits the demagnetization of the first permanent magnet 36. In the present embodiment, the spacer member 38 is made of resin. Therefore, the mass of the rotor 30 can be reduced as compared to a configuration in which the spacer member 38 is made of ceramic, for example. In a modification, the spacer member 38 may be changed in accordance with the shape of the hole 34 and may have a triangular section, for example. In the case of the spacer member 38 made of resin, the shape of the spacer member 38 can be caused to match the shape of the hole 34 in a relatively easy manner.

The second foamed sheet L2 is disposed between the sixth side surface W6 of the spacer member 38 and the second inner surface S2 of the hole 34 facing the sixth side surface W6. The second foamed sheet L2 has a configuration similar to that of the first foamed sheet L1 and holds the spacer member 38 in the hole 34. When centrifugal force is generated on the spacer member 38, the sixth side surface W6 of the spacer member 38 is pressed against the second inner surface S2 of the hole 34 via the second foamed sheet L2. Therefore, the spacer member 38 can be held in the hole 34 in a firmer manner.

The third foamed sheet L3 is disposed between the second side surface W2 of the first permanent magnet 36 and the fifth side surface W5 of the spacer member 38 facing the second side surface W2. The third foamed sheet L3 has a configuration similar to that of the first foamed sheet L1. The third foamed sheet L3 holds the spacer member 38 in the hole 34. When centrifugal force is generated on the first permanent magnet 36, the second side surface W2 of the first permanent magnet 36 is pressed against the fifth side surface W5 of the spacer member 38 via the third foamed sheet L3. Therefore, the first permanent magnet 36 can be held in the hole 34 in a firmer manner.

### Effects of Embodiment

As above, In the present embodiment, the spacer member 38 is disposed in the space on the outer side of the first permanent magnet 36 in the radial direction D1, and the first permanent magnet 36 and the spacer member 38 are held in the hole 34 by each of the foamed sheets L1 to L3. Therefore, the first permanent magnet 36 can be easily removed from the hole 34, for example, as compared to a technology of holding the first permanent magnet 36 in the hole 34 by injecting resin. The recyclability of the rotor 30 can be improved. In the present embodiment, the first foamed sheet L1, the second foamed sheet L2, and the third foamed sheet L3 are examples of "a first adhesive layer", "a second adhesive layer", and "a third adhesive layer", respectively.

Although the specific examples of the present disclosure have been described in detail above, these are merely examples and do not limit the scope of the claims. A technology as disclosed in the claims includes various modifications and alterations of the specific examples illustrated above. Modifications of the embodiment will be listed below.

### First Modification

The spacer member 38 may be made of another high-coercivity magnet having a higher coercive force than the first permanent magnet 36 instead of resin. In the high-coercivity magnet, demagnetization does not easily occur as compared to the first permanent magnet 36. With the configuration as above, the spacer member 38 functions as a magnet disposed in the rotor core 32 as with the first permanent magnet 36. As a result, the torque output from the electric motor 20 can be improved. Although the spacer member 38 is in proximity to the outer peripheral edge of the rotor core 32 (in other words, the second inner surface S2 positioned in the end portion of the hole 34 on the outer side in the radial direction D1), the demagnetization of the spacer member 38 is inhibited because the spacer member 38 is made of a high-coercivity magnet. The spacer member 38 made of a high-coercivity magnet can inhibit the demagnetization of the first permanent magnet 36 as with the spacer member 38 made of resin or ceramic.

### Second Modification

The first foamed sheet L1 may be disposed between the fourth side surface W4 and the fourth inner surface S4 instead of/in addition to being disposed between the third side surface W3 of the first permanent magnet 36 and the third inner surface S3 of the hole 34. Similarly, the fourth foamed sheet L4 may be disposed between the second permanent magnet 39 and the fourth inner surface S4 as well.

### Third Modification

The first permanent magnet 36 may be held in the hole 34 by double-faced tapes instead of the foamed sheets L1, L3, and the spacer member 38 may be held in the hole 34 by double-faced tapes instead of the foamed sheets L2, L3. In the present embodiment, the double-faced tape is an example of "a first adhesive layer", "a second adhesive layer", and "a third adhesive layer".

Each of the technical elements described in the present specification or the drawings demonstrates technical utility thereof on its own or in various combinations, and is not limited to the combinations described in the claims at the time of filing. Further, the technology exemplified in the present specification or the drawings can concurrently achieve a plurality of purposes, and has technical utility simply by achieving one purpose of the plurality of purposes.

## Claims

1. A rotor (30) of an electric motor (20), the rotor (30) comprising:
a rotor core (32) having a hole (34) extending along an axial direction of the rotor (30), the hole (34) having a section perpendicular to the axial direction that has a slot shape extending in a direction intersecting with a circumferential direction of the rotor (30);
a permanent magnet (36, 39) disposed in the hole (34) of the rotor core (32);
a spacer member (38) that is disposed in the hole (34) and is adjacent to the permanent magnet (36, 39) on an outer side of the permanent magnet (36, 39) in a radial direction of the rotor (30);
a first adhesive layer (L1) configured to hold the permanent magnet (36, 39) in the hole (34), the first adhesive layer (L1) being disposed between an inner surface of the hole (34) and at least part of side surfaces of the permanent magnet (36, 39) facing the inner surface; and
a second adhesive layer (L2) configured to hold the spacer member (38) in the hole (34), the second adhesive layer (L2) being disposed between the inner surface of the hole (34) and at least part of side surfaces of the spacer member (38) facing the inner surface.

2. The rotor (30) according to claim 1, wherein at least part of the spacer member (38) is made of resin.

3. The rotor (30) according to claim 1, wherein at least part of the spacer member (38) is made of a high-coercivity magnet having a higher coercive force than the permanent magnet (36, 39).

4. The rotor (30) according to any one of claims 1 to 3, wherein the second adhesive layer (L2) is disposed between an outer side surface positioned on the outer side in the radial direction out of the side surfaces of the spacer member (38) and the inner surface of the hole (34) facing the outer side surface.

5. The rotor (30) according to any one of claims 1 to 4, further comprising a third adhesive layer (L3) disposed between an outer side surface positioned on the outer side in the radial direction out of the side surfaces of the permanent magnet (36, 39) and a side surface of the spacer member (38) facing the outer side surface.
